# EUROPEAN PATENT SPECIFICATION

(11) **EP 3 758 299 B1**
(45) Date of publication and mention of the grant of the patent: **30.11.2022**
(21) Application number: 20160211.7
(22) Date of filing: 15.02.2017
(51) Int. Cl.: H04L 43/08, H04L 43/10

(54) **METHOD FOR PERFORMING CONNECTIVITY CHECK AND APPARATUS**
VERFAHREN ZUR DURCHFÜHRUNG EINER KONNEKTIVITÄTSPRÜFUNG UND VORRICHTUNG
PROCÉDÉ DE VÉRIFICATION DE CONNECTIVITÉ ET APPAREIL

(30) Priority: 26.02.2016 CN 201610108124
(43) Date of publication of application: 30.12.2020
(62) Divisional of application: 17755764.2
(73) Proprietor: HUAWEI TECHNOLOGIES CO., LTD., Shenzhen, Guangdong 518129 (CN)
(72) Inventor: ZHENG, Ruobin, Shenzhen, Guangdong 518129 (CN)
(74) Representative: Gill Jennings & Every LLP

(56) References cited:
- WO-A1-2015/058626
- US-A1- 2015 103 679

## Description

### TECHNICAL FIELD

The present invention relates to the communications field, and more specifically, to a method for performing a connectivity check and an apparatus.

### BACKGROUND

With development of wired technologies (including an optical fiber technology) and wireless technologies, an access network becomes a focus of attention of people. Fiber optic communications has advantages such as large communication capacity, high quality, stable performance, resistance of electromagnetic interference, and strong confidentiality. A fiber access network refers to an application form of using an optical fiber as a primary transmission medium in the access network to implement user information transmission. The fiber access network is not a conventional fiber optic transmission system, but a special fiber optic transmission network designed for an access network environment. The fiber access network can meet requirements of users for various services, has perfect monitoring and management systems, and can adapt to a requirement of future broadband integrated service digital network. Therefore, implementing fiber to the home is recognized as a development objective of the access network.

Currently, in a development process of the fiber access network, if a large quantity of physical nodes such as physical access nodes are disposed, costs of the fiber access network are relatively high. To reduce the costs of the fiber access network, a virtual node corresponding to the physical node may be disposed in the fiber access network. However, reliability of the access network in which the physical node and the virtual node exist is not high. US 2015/103679 A1 discloses testing connectivity between host machines comprising a plurality of virtual machines in a logical network.

### SUMMARY

The present invention provides a method for performing a connectivity check and an apparatus as defined in the appended claims, so as to improve network reliability.

### BRIEF DESCRIPTION OF DRAWINGS

FIG. 1a shows a network architectural diagram of an optical access network;
FIG. 1b shows a schematic block diagram of a network node according to an embodiment of the present invention;
FIG. 1c shows a schematic block diagram of an access node according to an embodiment of the present invention;
FIG. 2a shows a flowchart of a method for performing a connectivity check according to an embodiment of the present invention;
FIG. 2b shows a schematic diagram of a message sending method according to an embodiment of the present invention;
FIG. 2c shows a schematic diagram of a message sending method according to another embodiment of the present invention;
FIG. 3 shows a flowchart of a method for performing a connectivity check according to an embodiment of the present invention;
FIG. 4A - FIG. 4B show a flowchart of a method for performing a connectivity check according to an embodiment of the present invention;
FIG. 5 shows a flowchart of a method for performing a connectivity check according to an embodiment of the present invention;
FIG. 6 shows a schematic block diagram of a virtual proxy apparatus according to an embodiment of the present invention;
FIG. 7 shows a schematic block diagram of a virtual proxy apparatus according to another embodiment of the present invention;
FIG. 8 shows a schematic block diagram of a virtual node according to an embodiment of the present invention;
FIG. 9 shows a schematic block diagram of a virtual node according to another embodiment of the present invention; and
FIG. 10 shows a structural diagram of a virtual proxy apparatus according to still another embodiment of the present invention.

### DESCRIPTION OF EMBODIMENTS

The following clearly and completely describes the technical solutions in the embodiments of the present invention with reference to the accompanying drawings in the embodiments of the present invention.

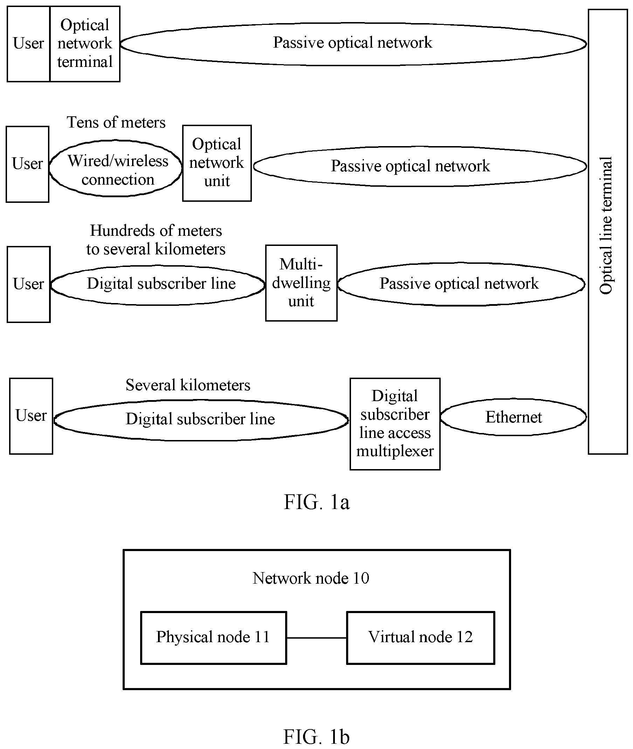

A method and an apparatus provided in the embodiments of the present invention may be applied to an optical access network. FIG. 1a shows a network architectural diagram of an optical access network. The optical access network (optical access network, OAN for short) includes a passive optical access network and an active access network, and is usually connected to each network node by using an optical line terminal (optical line terminal, OLT for short). The OLT may also be considered as a network node. For example, as shown in FIG. 1a, a connection between a user and the OLT mainly includes the following cases: The user or a customer-premises equipment (customer-premises equipment, CPE for short) and an optical network terminal (optical network terminal, ONT for short) are connected to the OLT by using a passive optical network (passive optical network, PON for short); the user is connected to an optical network unit (optical network unit, ONU for short) through a wired connection or a wireless connection, and the ONU is connected to the OLT by using the PON; the user is connected to a multi-dwelling unit (multi-dwelling unit, MDU for short) by using a digital subscriber line (digital subscriber line, DSL for short), and the MDU is connected to the OLT by using the PON; and the user is connected to a digital subscriber line access multiplexer (DSL access multiplexer, DSLAM for short) by using the digital DSL, and the DSLAM is connected to the OLT by using the Ethernet (Ethernet, ETH for short). In the plurality of cases, according to a location of the optical network unit or the optical network terminal, the ONT may be corresponding to fiber to the home (fiber to the home, FTTH for short), the ONU may be corresponding to fiber to the distribution point (fibre to the distribution point, FTTdp for short), and the MDU may be corresponding to fiber to the curb/building (fibre to the curb/building, FTTC/B for short).

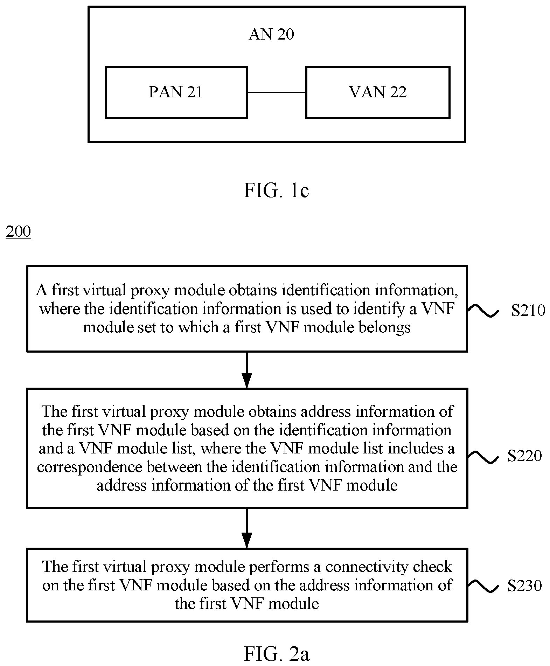

To reduce device costs, the network node in the embodiments of the present invention includes two parts. As shown in FIG. 1b, a network node 10 is deconstructed into a physical node 11 and a virtual node 12. The physical node 11 may communicate with the virtual node 12 by using a network. Deconstruction may be understood as moving most functions of a control plane or a data plane of the network node up to the virtual node, and is implemented by using a general purpose processor (for example, replacing original dedicated hardware with CPU software). A minimum function set remains on the network node, and a simplified network node is referred to as a physical node. A typical example is that the network node is an access node (access node, AN for short), for example, the physical node may be a physical access node (physical access node, "PAN" for short), and the virtual node may be a virtual access node (virtual access node, "VAN" for short); for example, as shown in FIG. 1c, an access node AN 20 may be deconstructed into a PAN 21 and a VAN 22. Another function that does not belong to the VAN may further be added to the VAN. For example, some functions of a broadband network gateway (broadband network gateway, BNG for short) such as an authentication, authorization and accounting (Authentication, Authorization and Accounting, AAA for short) client function, a Dynamic Host Configuration Protocol (Dynamic Host Configuration Protocol, "DHCP" for short) client function may be added; or some functions of a home gateway may be added.

For example, the optical line terminal in FIG. 1a is a complex chassis-based OLT. After the deconstruction, a function of main control board hardware of the OLT is implemented as software on a virtual node, and a backplane of the OLT may be connected with a common cable. In this way, the chassis-based OLT includes only an interface board, and may be simplified into a physical node such as a white-box OLT box, thereby reducing device costs. However, after the deconstruction of the chassis-based OLT, connectivity between the physical node and the virtual node may be abnormal, and reliability of the deconstructed system is reduced. To resolve the problem, the embodiments of the present invention provide a method for performing a connectivity check, so as to improve reliability.

It should be understood that the network node (for example, the OLT) may be an access node. The access node may be a drop point unit (drop point unit, DPU for short), an ONU, an ONT, an MDU, a DSLAM, or the like in the telecommunications field, or may be a cable modem (cable modem, CM for short), a cable media converter (cable media converter, CMC for short), a cable modem termination system (cable modem termination system, CMTS for short), a converged cable access platform (converged cable access platform, CCAP for short), or the like in the Cable field. This is not limited in the embodiments of the present invention.

In various embodiments of the present invention, a VNF module represents a module that is used to carry a network function and/or a service function of a virtual node corresponding to a physical node. A network function module and a service function module may be cloudified on the general purpose processor or a general purpose server, and exists in a form of a data center software module. One virtual node may be corresponding to one VNF module, or may be corresponding to a plurality of VNF modules, that is, a VNF module set. That is, a VNF module set may be corresponding to a virtual node. In addition, a virtual node may be implemented in a virtual network, and correspondingly, a VNF module set may further be corresponding to a virtual network.

### Embodiment 1

FIG. 2a shows a schematic flowchart of a method 200 for performing a connectivity check according to an embodiment of the present invention. The method 200 may be used to detect connectivity between modules or units of a deconstructed network node.

S210. A first virtual proxy module obtains identification information, where the identification information is used to identify a VNF module set to which a first VNF module belongs.

In various embodiments of the present invention, the first virtual proxy module is a proxy node of a virtual node, for example, a virtual node proxy (VAN proxy). A first virtual proxy module may be an operation, administration and maintenance (Operation, Administration and Maintenance, OAM) or connectivity check proxy. There may be an OAM or connectivity check protocol between the first virtual proxy module virtual node proxy and the virtual node, for example, an OAM or connectivity check protocol in the telecommunications field such as Bidirectional Forwarding Detection (Bidirectional Forwarding Detection, BFD)/Multiprotocol Label Switching (MultiProtocol Label Switching, MPLS) OAM. There may be another OAM or connectivity check protocol between the virtual node and a VNF, for example, an OAM or connectivity check protocol in a data center such as Ethernet OAM; or the OAM or connectivity check protocol between the virtual node proxy and the virtual node is the same as the OAM or connectivity check protocol between the virtual node and the VNF. The first virtual proxy module may be located in a device in which an ingress node or an ingress module of the virtual node is located (for example, a server or a virtual machine); and the device in which the ingress node or the ingress module of the virtual node is located may process one or more network functions or service functions. For example, the first virtual proxy module may be implemented in a software-defined networking (software-defined networking, SDN) controller or network functions virtualization infrastructure (Network Functions Virtualization Infrastructure, NFVI) gateway; or the first virtual proxy module may be an independent device. In a special case, alternatively, the first virtual proxy module virtual node proxy may be directly embedded in a physical node. A location of the first virtual proxy module is not limited.

For example, the identification information includes an identifier ID of the VNF module set. The ID of the VNF module set may be an ID of a virtual node corresponding to the VNF module set, or an ID of a virtual network to which the VNF module set belongs.

For example, that a first virtual proxy module obtains identification information includes: receiving, by the first virtual proxy module, a first message sent by a physical node or a network management system, where the first message includes the identification information; and obtaining, by the first virtual proxy module, the identification information based on the first message.

In addition, when the first virtual proxy module is directly embedded in the physical node, the first virtual proxy module may directly obtain the identification information from the physical node.

The first virtual proxy module is the proxy node of the virtual node, and has a correspondence with the virtual node and the physical node.

The first message is a message for performing a connectivity check. Optionally, the first message sent by the physical node is a first OAM message or a first connectivity check message. The first message sent by the network management system may be an instruction or a command line that includes the identification information.

It should be understood that, in various embodiments of the present invention, the first VNF module may represent any module in the VNF module set. That is, when the VNF module set includes a plurality of VNF modules, the first virtual proxy module may use a processing manner for the first VNF module to process each VNF module included in the VNF module set.

S220. The first virtual proxy module obtains address information of the first VNF module based on the identification information and a VNF module list, where the VNF module list includes a correspondence between the identification information and the address information of the first VNF module.

For example, the address information may be an ID and/or an address.

For example, the first virtual proxy module may obtain the VNF module list in advance. Specifically, the first virtual proxy module receives the VNF module list sent by the SDN controller or the network management system, and stores the VNF module list.

S230. The first virtual proxy module performs a connectivity check on the first VNF module based on the address information of the first VNF module.

After obtaining the address information of the first VNF module based on the identification information and the VNF module list, the first virtual proxy module may send, based on the address information of the first VNF module, the message for performing a connectivity check to the first VNF module, and perform a connectivity check on the first VNF module.

Optionally, in an embodiment of the present invention, the first virtual proxy module sends a second message to the first VNF module based on the first message and the address information of the first VNF module, where a destination address of the second message is the address information of the first VNF module, and when not receiving a first response message sent by the first VNF module, the first virtual proxy module determines that the first VNF module or connectivity of the first VNF module is abnormal.

The second message is a message for performing a connectivity check on the first VNF module. The first response message is used to indicate a connectivity check result of the first VNF module, that is, the first VNF module is normal and the connectivity of the first VNF module is normal. The connectivity of the first VNF module may be connectivity between the first virtual proxy module and the first VNF module. Optionally, the second message may further include the identification information.

For example, the second message is a second OAM message, or the second message is a second connectivity check message.

Optionally, in another embodiment of the present invention, the first virtual proxy module sends a second message to the first VNF module based on the first message and the address information of the first VNF module, where a destination address of the second message is the address information of the first VNF module; and when receiving a first response message sent by the first VNF module, the first virtual proxy module sends a second response message to the physical node or the network management system.

The second response message is used to indicate a connectivity check result of the VNF module set to which the first VNF module belongs, that is, the VNF module set is normal and connectivity of the VNF module set is normal. If the VNF module set includes only the first VNF module, after determining that the first VNF module and the connectivity of the first VNF module are normal, the first virtual proxy module sends a second response message to the physical node or the network management system.

In this embodiment of the present invention, the first virtual proxy module may determine, based on whether a first response message from the first VNF module is received, whether the first VNF module and the connectivity of the VNF module are abnormal, so as to implement a connectivity check on the first VNF module.

For the first VNF module, when receiving the second message sent by the virtual proxy module, the first VNF module sends the first response message to the virtual proxy module after determining that the first VNF module is normal. The first response message is used to indicate a connectivity check result of the first VNF module, which may be specifically that the first VNF module is normal and the connectivity of the first VNF module is normal. The connectivity of the first VNF module is connectivity between the first VNF module and the virtual proxy module.

For example, the OAM message is used as an example. When receiving the OAM message from the physical node or the network management system, the first virtual proxy module obtains the identification information from the OAM message, and obtains the address information of the first VNF module based on the identification information and the VNF module list; and then the first virtual proxy module sends the OAM message to the first VNF module, where a destination address of the OAM message is an address of the first VNF module, and a source address of the OAM message is an address of the first virtual proxy module. Optionally, the OAM message may further include the identification information. After receiving the OAM message sent by the first virtual proxy module, the first VNF module returns a response message to the first virtual proxy module if the first VNF module operates normally. After receiving response messages sent by all VNF modules, the first virtual proxy module may send the response message to the physical node or the network management system to notify the physical node or the network management system that links of all the VNF modules are connected.

It should be understood that, in various embodiments of the present invention, in addition to a connectivity check, the OAM further provides functions such as a performance check and physical layer information reporting. This is not limited in the embodiments of the present invention.

Optionally, when the VNF module set includes the plurality of VNF modules, for example, when the VNF module set includes the first VNF module and a second VNF module, and the VNF module list further includes a correspondence between the identification information and address information of the second VNF module. After S210, the method provided in this embodiment of the present invention further includes:
obtaining, by the first virtual proxy module, the address information of the second VNF module based on the identification information and the VNF module list; and
performing, by the first virtual proxy module, a connectivity check on the second VNF module based on the address information of the second VNF module.

In this embodiment of the present invention, the first VNF module and the second VNF module belong to a same VNF module set. The first virtual proxy module may perform, based on the obtained address information of the first VNF module and the obtained address information of the second VNF module, a connectivity check on the first VNF module and the second VNF module that are corresponding to a first virtual network.

Optionally, in an implementation provided in this embodiment of the present invention, that the first virtual proxy module performs a connectivity check on the second VNF module based on the address information of the second VNF module includes: sending, by the first virtual proxy module, a third message to the second VNF module based on the first message and the address information of the second VNF module, where a destination address of the third message is the address information of the second VNF module; and when the first virtual proxy module does not receive a third response message sent by the second VNF module, determining that the second VNF module or connectivity of the second VNF module is abnormal.

The third message is a message for performing a connectivity check on the second VNF module. The third response message is used to indicate a connectivity check result of the second VNF module, that is, the second VNF module is normal and connectivity of the second VNF module is normal.

Optionally, in another implementation provided in this embodiment of the present invention, that the first virtual proxy module performs a connectivity check on the second VNF module based on the address information of the second VNF module includes: sending, by the first virtual proxy module, a third message to the second VNF module based on the first message and the address information of the second VNF module, where a destination address of the third message is the address information of the second VNF module; and when the first virtual proxy module receives the first response message sent by the first VNF module and a third response message sent by the second VNF module, sending a fourth response message to the physical node or the network management system.

The fourth response message is used to indicate a connectivity check result of the VNF module set to which the second VNF module and the first VNF module belong, that is, the VNF module set is normal and connectivity of the VNF module set is normal. If the VNF module set includes only the first VNF module and the second VNF module, the first virtual proxy module sends the fourth response message to the physical node or the network management system only after receiving the first response message and the third response message.

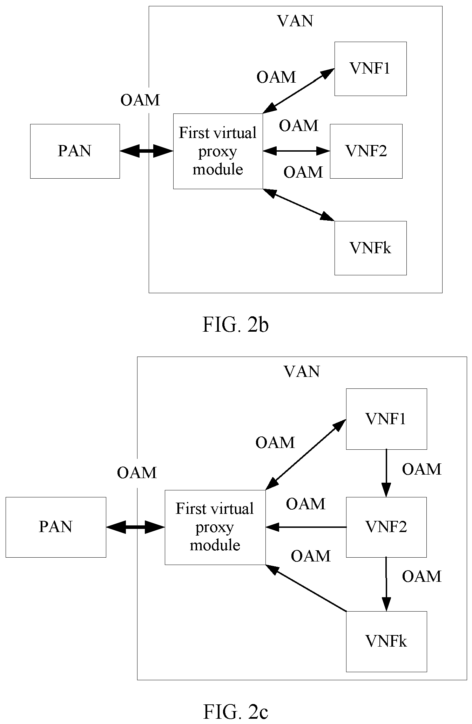

It should be understood that, in various embodiments of the present invention, a manner in which the first virtual proxy module sends a message such as the OAM message or the connectivity check message to the plurality of VNF modules may be that the first virtual proxy module directly sends the message to each VNF module, as shown in FIG. 2b; or may be that the first virtual proxy module sends the message to the first VNF module, and then the first VNF module forwards the message to the second VNF module, as shown in FIG. 2c. Each VNF module sends a response message to the first virtual proxy module.

For example, the first virtual proxy module may send the second message to the first VNF module, and send the third message to the second VNF module. Alternatively, the first virtual proxy module sends the second message to the first VNF module, and sends a fifth message to the second VNF module by using the first VNF module, where a destination address of the fifth message is the address information of the second VNF module.

Optionally, the third message is a third OAM message, or the third message is a third connectivity check message.

It should be understood that the virtual node may be implemented in one virtual network, that is, corresponding to one virtual network; or may be implemented in two or more virtual networks, that is, corresponding to two or more virtual networks.

Optionally, an example in which the virtual node is corresponding to two virtual networks is used. In an embodiment of the present invention, the VNF module list further includes a correspondence between the identification information and address information of a second virtual proxy module. After S210, the method provided in this embodiment of the present invention further includes: obtaining, by the first virtual proxy module, the address information of the second virtual proxy module based on the identification information and the VNF module list; sending, by the first virtual proxy module, a fourth message to the second virtual proxy module based on the address information of the second virtual proxy module, where a destination address of the fourth message is the address information of the second virtual proxy module; and when the first virtual proxy module does not receive a fifth response message sent by the second virtual proxy module, determining that the second virtual proxy module and connectivity of the second virtual proxy module are abnormal.

The fourth message is used to detect connectivity of the second virtual proxy module and a VNF module corresponding to the second virtual proxy module. The fifth response message is used to indicate a connectivity check result of the second virtual proxy module and the VNF module corresponding to the second virtual proxy module.

In this embodiment of the present invention, the first virtual proxy module is corresponding to a first virtual network, and the second virtual proxy module is corresponding to a second virtual network. The first virtual proxy module may further implement a connectivity check on a VNF module corresponding to the second virtual network by using the second virtual proxy module.

Optionally, in another embodiment of the present invention, the VNF module list further includes a correspondence between the identification information and address information of the second virtual proxy module. After S210, the method provided in this embodiment of the present invention further includes: obtaining, by the first virtual proxy module, the address information of the second virtual proxy module based on the identification information and the VNF module list; sending, by the first virtual proxy module, a fourth message to the second virtual proxy module based on the address information of the second virtual proxy module, where a destination address of the fourth message is the address information of the second virtual proxy module; and when the first virtual proxy module receives a fifth response message sent by the second virtual proxy module, sending a sixth response message to the physical node or the network management system.

The sixth response message is used to indicate a connectivity check result of the second virtual proxy module and the VNF module corresponding to the second virtual proxy module.

Optionally, after determining that the first VNF module or the connectivity of the first VNF module is abnormal, the first virtual proxy module switches a service and/or a function corresponding to the first VNF module to a third VNF module, where the third VNF module is a backup module of the first VNF module.

For example, when the first VNF module or a related link of the first VNF module is abnormal, the first virtual proxy module may report fault information to a network function virtualization (network function virtualization, NFV for short) manager. The NFV manager may start a backup VNF module to replace the abnormal VNF module, and trigger the SDN controller to deliver a forwarding entry related to the backup VNF module, so as to notify the first virtual proxy module of an ID and an address that are of the backup VNF module corresponding to the first VNF module. The first virtual proxy module modifies the VNF module list based on the ID of the backup VNF module and the address of the backup VNF module, and replaces a related item of the first VNF module with the backup VNF module of the first VNF module. It should be understood that, for a fault of a VNF module or a related link of the VNF module that appears below, this method may be used for processing. For brevity, details are not described below again.

According to the method for performing a connectivity check in this embodiment of the present invention, the first virtual proxy module performs a connectivity check on the first VNF module based on the obtained address information of the first VNF module, so as to improve reliability of a network node.

### Embodiment 2

In a method provided in another embodiment of the present invention, if a VNF module corresponding to a first virtual proxy module does not exist, the first virtual proxy module directly sends a message to a second virtual proxy module, and performs a connectivity check on a VNF module corresponding to the second virtual proxy module by using the second virtual proxy module.

The method for performing a connectivity check provided in the another embodiment of the present invention includes:
obtaining, by a first virtual proxy module, identification information, where the identification information is used to identify a VNF module set to which a first VNF module belongs;
obtaining, by the first virtual proxy module, address information of the second virtual proxy module based on the identification information and a VNF module list, where the VNF module list includes a correspondence between the identification information and the address information of the second virtual proxy module; and
sending, by the first virtual proxy module, a first message to the second virtual proxy module based on the address information of the second virtual proxy module, where a destination address of the first message is the address information of the second virtual proxy module.

The first message is used to perform a connectivity check on the second virtual proxy module and a VNF module corresponding to the second virtual proxy module.

Correspondingly, the second virtual proxy module receives the first message sent by the first virtual proxy module, where the first message includes the identification information, and the identification information is used to identify the VNF module set to which the first VNF module belongs; the second virtual proxy module obtains address information of the first VNF module based on the identification information and the VNF module list, where the VNF module list includes a correspondence between the identification information and the address information of the first VNF module; and the second virtual proxy module performs a connectivity check on the first VNF module based on the address information of the first VNF module.

That is, the second virtual proxy module may perform, based on the identification information from the first virtual proxy module, a connectivity check on the VNF module corresponding to the second virtual proxy module, for example, the first VNF module.

The first message is a first OAM message, or is a first connectivity check message.

In an implementation of the present invention, that the second virtual proxy module performs a connectivity check on the first VNF module based on the address information of the first VNF module includes: sending, by the second virtual proxy module, a second message to the first VNF module based on the first message and the address information of the first VNF module, where a destination address of the second message is the address information of the first VNF module; and when the second virtual proxy module does not receive a first response message sent by the first VNF module, determining that the first VNF module or connectivity of the first VNF module is abnormal.

Optionally, the second message is a second OAM message, or the second message is a second connectivity check message.

In another implementation of the present invention, that the second virtual proxy module performs a connectivity check on the first VNF module based on the address information of the first VNF module includes: sending, by the second virtual proxy module, a second message to the first VNF module based on the first message and the address information of the first VNF module, where a destination address of the second message is the address information of the first VNF module; and when the second virtual proxy module receives a first response message sent by the first VNF module, sending a second response message to the first virtual proxy module.

The second response message is used to indicate a connectivity check result of the second virtual proxy module and the VNF module corresponding to the second virtual proxy module. If the second virtual proxy module is corresponding to only one VNF module, for example, the first VNF module, after receiving the first response message, the second virtual proxy module may send the second response message to the first virtual proxy module; or if the second virtual proxy module is corresponding to a plurality of VNF modules, after receiving a response message sent by each VNF module in the plurality of VNF modules, the second virtual proxy module sends the second response message to the first virtual proxy module.

In this embodiment of the present invention, the method for performing a connectivity check on the VNF module corresponding to the second virtual proxy module by the second virtual proxy module is the same as the method for performing a connectivity check on the VNF module corresponding to the first virtual proxy module by the first virtual proxy module.

### Embodiment 3

The following separately describes a case in which a virtual node is corresponding to a first virtual network, and a case in which the virtual node is corresponding to the first virtual network and a second virtual network.

A first virtual proxy module receives a first message sent by a physical node. The first message may be an operation, administration and maintenance OAM message or a connectivity check message. The first OAM message carries an identification information. For example, the first message is a first OAM message, and the first OAM message carries the identification information. The identification information includes an ID of the virtual node or an ID of the first virtual network.

The first virtual proxy module determines an address of a first VNF module based on the identification information and a VNF module list.

The first virtual proxy module sends a second OAM message to the first VNF module based on the first OAM message and the address of the first VNF module. A destination address of the second OAM message is the address of the first VNF module, and a source address of the second OAM message is an address of the first virtual proxy module.

When receiving a first response message sent by the first VNF module, the first virtual proxy module sends a second response message to the physical node; or
when not receiving a first response message sent by the first VNF module, the first virtual proxy module determines that the first VNF module is abnormal.

After the first VNF module receives the second OAM message sent by the first virtual proxy module, if the first VNF module is normal and connectivity between the first VNF module and the first virtual proxy module is normal, the first VNF module may send the first response message to the first virtual proxy module. After receiving response messages sent by all VNF modules, the first virtual proxy module may send the second response message to the physical node to notify the physical node that links on all the VNF modules are connected.

In various embodiments of the present invention, "first", "second", and the like are intended to distinguish between different objects, for example, to distinguish different "VNF modules" or "virtual networks". There is no other limitation on the present invention.

For another example, the first message is a first connectivity check message, and the first connectivity check message carries the identification information.

The first virtual proxy module sends a second connectivity check message to the first VNF module based on the first connectivity check message and the address of the first VNF module. A destination address of the second connectivity check message is the address of the first VNF module, and a source address of the second connectivity check message is the address of the first virtual proxy module.

When receiving a first response message sent by the first VNF module, the first virtual proxy module sends the second response message to the physical node; or
when not receiving a first response message sent by the first VNF module, the first virtual proxy module determines that the first VNF module is abnormal.

After the first VNF module receives the second connectivity check message sent by the first virtual proxy module, if the first VNF module is normal and the connectivity between the first VNF and the first virtual proxy module is normal, the first VNF module may return a response message such as a fourth response message to the first virtual proxy module.

In an embodiment, the identification information such as the ID of the virtual node ID or the ID of the virtual network may be carried by using extended Ethernet OAM. For example, as shown in Table 1, a code field of Ethernet OAM may be used to represent the ID of the virtual node or the ID of the virtual network. Octets indicate an 8-bit field, and an Ethernet type field is set to 88-09, indicating a slow protocol (slow protocol). A subtype field is set to 0x03, indicating an Ethernet OAM format. A reserved field (a value is 05-FD) of the code field may be used to indicate that an OAM packet includes the ID of the virtual node or the ID of the virtual network.

**Table 1**

| **Octets** | **Ethernet** |
|---|---|
| 6 | Destination Address = 01-80-C2-00-00-02 |
| 6 | Source Address |
| 2 | Ethernet Type = 88-09 (slow protocols) |
| X | ... |
| 1 | Code = 0xFE |
| X | ... |
| 1 | ID of a virtual node or ID of a virtual network |
| X | ID of a virtual node or ID of a virtual network |
| X | ... |
| X | Pad |
| 4 | FCS |

Table 2 shows an example of a VNF module list. The VNF module list includes address information of a VNF module, and a correspondence between the ID of the virtual node and the ID of the first virtual network corresponding to the virtual node. It should be understood that Table 2 is merely used as an example for description, and is not intended to limit the scope of this embodiment of the present invention is not limited. The virtual node shown in FIG. 2, for example, a virtual optical line terminal 1 (VOLT1), may include k VNFs, and addresses corresponding to the k VNFs are a1 to ak respectively. The virtual node may be corresponding to one or more virtual networks. For example, the virtual node is corresponding to the first virtual network such as a virtual extensible local area network (Virtual Extensible local area network, "VXLAN" for short). For example, a virtual network identifier (Virtual local area network Identifier, "VID" for short) or a virtual extensible local area network identifier (VXLAN Network Identifier, "VNI" for short) may be assigned for interconnection between the VNFs of the virtual node or interconnection between the VNFs of the virtual node and a virtual node proxy. Table 2 may further include a plurality of virtual nodes and VNF information corresponding to the plurality of virtual nodes.

**Table 2**

| **ID of Virtual Node** | **First Virtual Network Identifier** | **VNF ID or SF ID** | **VNF or SF Address** |
|---|---|---|---|
| VOLT1 | VxLAN1 | VNF1 | al |
| VOLT1 | VxLAN1 | ... | ... |
| VOLT1 | VxLAN1 | VNFk | ak |

In an embodiment, the first virtual proxy module determines an address of each VNF module in the first virtual network and an address of a second virtual proxy module based on the VNF module list.

Specifically, when the virtual node is corresponding to the first virtual network and the second virtual network, the first virtual proxy module determines, based on the VNF module list, the address of each VNF module in the first virtual network and the address of the second virtual proxy module in the second virtual network.

Herein, the first virtual proxy module and the second virtual proxy module cross a plurality of sites such as a first site and a second site. For example, the first site is a CO site and the second site is a POP site, and a corresponding virtual network identifier in the CO site may be completely different from a virtual network identifier in the POP site, for example, the first virtual proxy module is located in the CO site, and the second virtual proxy module is located in the POP site. The second virtual proxy module may be located in a device in which an ingress node or an ingress module of the second site is located. This is not limited herein.

For example, the first message is a third OAM message, and the third OAM message carries the identification information.

The first virtual proxy module sends a fourth OAM message to each VNF module in the first virtual network and the second virtual proxy module based on the third OAM message, the address of each VNF module in the first virtual network, and the address of the second virtual proxy module; and after receiving the first response message sent by each VNF module in the first virtual network and a third response message sent by the second virtual proxy module, the first virtual proxy module may send the fourth response message to the physical node; or
when not receiving the first response message sent by the first VNF module in the first virtual network, the first virtual proxy module determines that the first VNF module is abnormal; or
when not receiving a third response message sent by the second virtual proxy module, the first virtual proxy module determines that the second virtual proxy module is abnormal.

For example, after receiving the OAM message sent by the first virtual proxy module, the second virtual proxy module sends the OAM message to each VNF module in the second virtual network. If connectivity on each VNF module in the second virtual network is normal and each VNF module is normal, each VNF module in the second virtual network may send a response message such as a fifth response message to the second virtual proxy module. The second virtual proxy module may send the third response message to the first virtual proxy module after receiving all the VNF modules. After receiving the first response message sent by each VNF module in the first virtual network and the third response message sent by the second virtual proxy module, the first virtual proxy module sends the fourth response message to the physical node, so as to notify the physical node that all the VNF modules and connectivity of the VNF modules are normal.

For another example, optionally, the first message is a third connectivity check message, and the third connectivity check message carries the identification information. The first virtual proxy module sends a fourth connectivity check message to each VNF module in the first virtual network and the second virtual proxy module based on the third connectivity check message, the address of each VNF module in the first virtual network, and the address of the second virtual proxy module.

When receiving the first response message sent by each VNF module in the first virtual network and a third response message sent by the second virtual proxy module, the first virtual proxy module sends the fourth response message to the physical node; or
when not receiving the first response message sent by the first VNF module in the first virtual network, the first virtual proxy module determines that the first VNF module is abnormal; or
when not receiving a third response message sent by the second virtual proxy module, the first virtual proxy module determines that the second virtual proxy module is abnormal.

It should be understood that, as described above, the ID of the virtual node or the ID of the virtual network carried by the connectivity check message or the OAM message herein may be carried by using the extended Ethernet OAM. For brevity, details are not described herein again.

Optionally, Table 3 shows another example of the VNF module list. A difference between Table 3 and Table 2 is that an second virtual proxy module (a VAN proxy 2) and an address of the second virtual network (an address of the VAN proxy 2) are added, and other terms are the same as those in Table 2. Table 4 shows an example of a VNF module list of the second virtual proxy module. As shown in Table 4, a difference between Table 4 and Table 3 is that a second virtual network identifier (VxLAN2) of a site at the same level, that is, the second virtual proxy module, and addresses of a plurality of VNF modules in the second virtual network (for example, an address bn to an address bm) are added.

**Table 3**

| **ID of Virtual Node** | **First Virtual Network Identifier** | **VNF ID or SF ID** | **VNF or SF Address** |
|---|---|---|---|
| VOLT1 | VxLAN1 | VNF1 | al |
| VOLT1 | VxLAN1 | ... | ... |
| VOLT1 | VxLAN1 | VNFk | ak |
| VOLT1 | VxLAN1 | VAN proxy 2 | Address of the VAN proxy 2 |

**Table 4**

| **ID of Virtual Node** | **First Virtual Network Identifier (for example, a CO site)** | **Second Virtual Network Identifier (for example, a POP site)** | **VNF ID or SF ID** | **VNF or SF Address** |
|---|---|---|---|---|
| VOLT1 | VxLAN1 | VxLAN2 | VNFn | bn |
| ... | ... | ... | ... | ... |
| VOLT1 | VxLAN1 | VxLAN2 | VNFm | bm |

Optionally, in an embodiment, when the first virtual proxy module or a related link of the first virtual proxy module is abnormal, the physical node cannot receive a related response message of the first virtual proxy module, and therefore the physical node reports fault information of the first virtual proxy module or the related link of the first virtual proxy module to an SDN controller. The SDN controller generates a forwarding entry related to a backup proxy module of the first virtual proxy module based on the fault information, and delivers the forwarding entry to the backup proxy module of the first virtual proxy module and the physical node. After receiving the forwarding entry, the physical node obtains an address of the backup proxy module of the first virtual proxy module based on the forwarding entry, so that the backup proxy module of the first virtual proxy module replaces the first virtual proxy module to complete a subsequent management operation performed on each VNF module. That is, when the first virtual proxy module is abnormal, the backup module of the first virtual proxy module still applies to the technical solution in embodiments of the present invention. This is not limited herein.

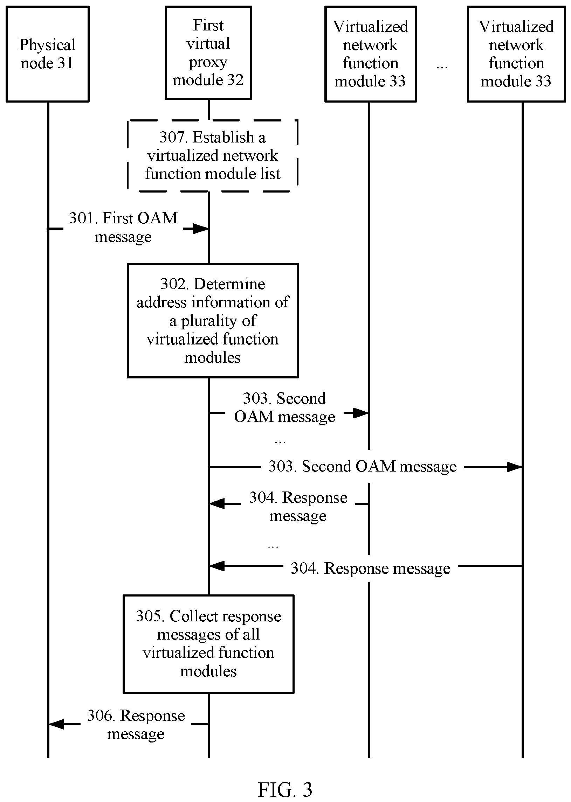

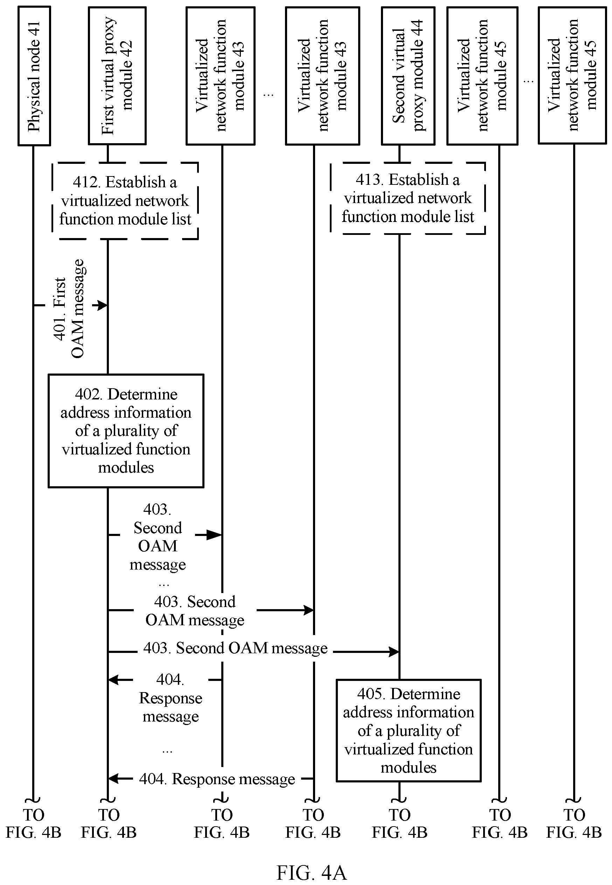

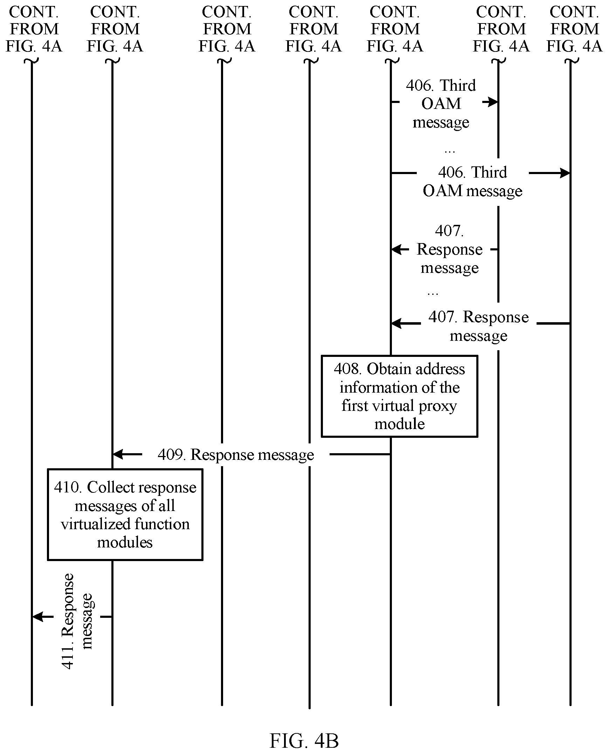

The following describes the technical solution in the embodiments of the present invention with reference to FIG. 3 and FIG. 4A - FIG. 4B. It should be understood that FIG. 3 and FIG. 4A - FIG. 4B are merely used as an example for description, and should not be construed as a limitation on the present invention.

FIG. 3 shows a schematic diagram of an example of performing a connectivity check according to an embodiment of the present invention. As shown in FIG. 3, a network node includes a physical node 31, a first virtual proxy module 32, and a plurality of virtualized network function VNF modules 33 (for example, a quantity is 1 to k) in a first virtual network.

301. The physical node 31 sends a first OAM message to the first virtual proxy module 32, where the OAM message may carry an ID of a virtual node or an ID of a first virtual network, and a destination address is an address of the first virtual proxy module.

302. The first virtual proxy module 32 determines an ID and an address that are of each VNF module based on the first OAM message and a virtualized network function VNF module list.

303. The first virtual proxy module 32 sends a second OAM message to each VNF module, where the second OAM message may carry the ID of the virtual node or the ID of the first virtual network, destination addresses are addresses of a VNF module 1 to a VNF module k respectively, and a source address is the address of the first virtual proxy module.

304. After receiving the second OAM message, the VNF module 33 (for example, the VNF module 1 to the VNF module k) returns a response message (a destination address is the address of the first virtual proxy module, and source addresses are the addresses of the VNF module 1 to the VNF module k respectively) to the first virtual proxy module 32.

305. The first virtual proxy module 32 collects response messages of all the VNF modules 33, and in this case, it indicates that all links of the plurality of VNF modules 33 are connected.

306. The first virtual proxy module 32 sends a response message (a destination address is an address of the physical node, and a source address is the address of the first virtual proxy module) to the physical node 31.

Optionally, 307. The first virtual proxy module 32 may establish a VNF module list, where the VNF module list includes a correspondence between address information of the VNF module and the ID of the virtual node or the ID of the first virtual network corresponding to the virtual node.

Optionally, when a VNF module in the plurality of VNF modules in the first virtual network is abnormal, the first virtual proxy module processes the fault by using the foregoing method.

It should be understood that, in this example, only an OAM message is used as an example for description, and the OAM message may be replaced with a connectivity check message. This is also applicable to the procedure, and is not limited herein.

It should be further understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

FIG. 4A - FIG. 4B show a schematic diagram of another example of performing a connectivity check according to an embodiment of the present invention. As shown in FIG. 4A - FIG. 4B, a network node includes a physical node 41, a first virtual proxy module 42, a plurality of virtualized network function VNF modules 43 (for example, a quantity is 1 to k) in a first virtual network, a second virtual proxy module 44, and a plurality of virtualized network function modules 45 (for example, a quantity is n to m) in a second virtual network. A difference between FIG. 4A - FIG. 4B and FIG. 3 is that the second virtual proxy module 44 is added. The second virtual proxy module 44 and the first virtual proxy module 41 are located in different sites. An upper-level site of the second virtual proxy module 44 is a site corresponding to the first virtual proxy module 41.

401. The physical node 41 sends a first OAM message to the first virtual proxy module 42, where the OAM message may carry an ID of a virtual node or an ID of a first virtual network, and a destination address is an address of the first virtual proxy module.

402. The first virtual proxy module 42 determines, based on the first OAM message and a virtualized network function VNF module list, an address of each VNF module in the plurality of VNF modules 43 in the first virtual network, and an address of the second virtual proxy module 44.

403. The first virtual proxy module 42 sends a second OAM message to each VNF module in the plurality of VNF modules 43 in the first virtual network and the second virtual proxy module 44, where the second OAM message may carry the ID of the virtual node or the ID of the first virtual network, destination addresses are the address of the VNF module (for example, the VNF module 1 to the VNF module k) in the first virtual network and the address of the second virtual proxy module 44 respectively, and a source address is the address of the first virtual proxy module.

404. After receiving the second OAM message, the VNF module 43 (for example, the VNF module 1 to the VNF module k) returns a response message (a destination address is the address of the first virtual proxy module, and source addresses are the addresses of the VNF module 1 to the VNF module k respectively) to the first virtual proxy module 42.

405. The second virtual proxy module 44 determines addresses of the plurality of virtualized network function modules 45 in the second virtual network based on the second OAM message and a VNF module list.

406. The second virtual proxy module 44 separately sends a third OAM message to each VNF module in the plurality of virtualized network function modules 45 (for example, the VNF module n to the VNF module m) in the second virtual network based on the second OAM message and the addresses of the plurality of virtualized network function modules 45 (for example, the VNF module n to the VNF module m) in the second virtual network.

407. The second virtual proxy module 44 receives response messages (a destination address is the address of the second virtual proxy module, and source addresses are the addresses of the VNF module n and the VNF module m respectively) sent by all the VNF modules in the second virtual network.

408. After collecting the response messages of all the VNF modules in the second virtual network, the second virtual proxy module 44 obtains address information of the first virtual proxy module 42 based on the second OAM message.

409. The second virtual proxy module 44 sends a response message (a destination address is the address of the first virtual proxy module, and a source address is the address of the second virtual proxy module) to the first virtual proxy module 42 based on the address information of the first virtual proxy module 42.

410. The first virtual proxy module 42 collects response messages of all the VNF modules 43 in the first virtual network and a response message of the second virtual proxy module 44.

411. The first virtual proxy module 42 sends a response message (a destination address is an address of the physical node, and a source address is the address of the first virtual proxy module) to the physical node 41.

Optionally, 412. The first virtual proxy module 42 may establish a VNF module list in the first virtual network, where the VNF module list includes a correspondence between address information of the VNF module in the first virtual network and the ID of the virtual node or the ID of the first virtual network corresponding to the virtual node.

Optionally, 413. The second virtual proxy module 44 may establish a VNF module list in the second virtual network, where the VNF module list includes a correspondence between address information of the VNF module in the second virtual network and the ID of the virtual node or the ID of the first virtual network corresponding to the virtual node.

When compared with the procedure in FIG. 3, in a procedure in FIG. 4A - FIG. 4B, the first virtual proxy module may send the OAM message to the second virtual proxy module when sending the OAM message to the plurality of VNF modules in the first virtual network. The second virtual proxy module sends the OAM message to the plurality of VNF modules in the second virtual network based on the OAM message, and the plurality of VNF modules in the second virtual network may further return response messages to the second virtual proxy module. After collecting all messages of the plurality of VNF modules in the second virtual network, based on the address information of the first virtual proxy module carried in the OAM message, the second virtual proxy module obtains an ID of the first virtual proxy module, and sends the response messages to the first virtual proxy module. After the first virtual proxy module receives the response messages of all the VNF modules in the first virtual network and the response messages of the second virtual proxy module, it indicates that links of the VNF modules are connected. Finally, the first virtual proxy module sends the response messages to the physical node.

Optionally, in this example, when a VNF module in the plurality of VNF modules in the first virtual network is abnormal, the first virtual proxy module processes the fault by using the foregoing method.

It should be understood that, in this example, only an OAM message is used as an example for description, and the OAM message may be replaced with a connectivity check message. This is also applicable to the procedure, and is not limited herein.

In this embodiment of the present invention, a connectivity check mechanism such as the OAM message and the connectivity check message is introduced mainly to detect connectivity between a physical node and a virtual node after deconstruction. In the foregoing description, a physical node sends a message such as an OAM message and a connectivity check message to a virtual node or a virtual proxy module. Optionally, alternatively, the virtual node or the virtual proxy module may send a message to the physical node to detect connectivity between the physical node and the virtual node after deconstruction.

Therefore, optionally, the method further includes:
sending, by the first virtual proxy module, a sixth message to the physical node, where the sixth message includes the identification information, and the identification information further includes an ID of the physical node; and
when the first virtual proxy module does not receive a seventh response message sent by the physical node, determining that the physical node or connectivity of the physical node is abnormal, where the seventh response message is used to indicate that the physical node is normal.

The connectivity of the physical node is connectivity between the physical node and the first virtual proxy module.

Optionally, the method further includes:
sending, by the first virtual proxy module, a sixth message to the physical node, where the sixth message includes the identification information, and the identification information further includes an ID of the physical node; and
when the first virtual proxy module receives a seventh response message sent by the physical node, determining that the physical node and connectivity of the physical node are normal.

Optionally, the sixth message is a sixth OAM message, or the sixth message is a sixth connectivity check message.

Optionally, before the first virtual proxy module sends the sixth message to the physical node, the method further includes: receiving, by the first virtual proxy module, a seventh message sent by a third VNF module, where the seventh message includes the identification information; and
after the first virtual proxy module receives the seventh response message sent by the physical node, the method further includes: sending, by the first virtual proxy module, an eighth response message to the third VNF module, where the eighth response message is used to indicate that the physical node and connectivity of the physical node are normal.

Optionally, the third VNF module is the first VNF module, or is a second VNF module.

Optionally, the seventh message is a seventh OAM message, or the seventh message is a seventh connectivity check message.

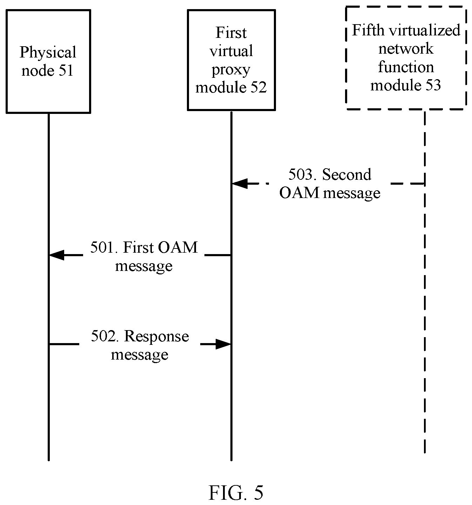

For example, FIG. 5 shows a schematic diagram of still another example of performing a connectivity check according to an embodiment of the present invention. It should be understood that FIG. 5 is merely used as an example for description, and should not be construed as a limitation on the present invention. As shown in FIG. 5, a network node includes a physical node 51, a first virtual proxy module 52, and a fifth VNF module 53 in a plurality of virtualized network function VNF modules in a first virtual network.

501. The physical node 51 receives a first OAM message sent by the first virtual proxy module 52, where a destination address is an address of the physical node.

502. The first virtual proxy module 52 receives a response message sent by the physical node 51.

Optionally, 503. The first virtual proxy module 52 receives a second OAM message of the fifth VNF module, and sends the first OAM message to the physical node 51 based on the second OAM message.

It should be understood that this step may be that the first virtual proxy module 52 receives the second OAM message of one fifth VNF module, or may be that the first virtual proxy module 52 receives the second OAM message of a plurality of fifth VNF modules; and sends the first OAM message to the physical node 51 based on the second OAM message of the one or more fifth VNF modules. Correspondingly, after receiving the response message sent by the physical node 51, the first virtual proxy module 52 sends the response message to the one or more fifth VNF modules.

When the first virtual proxy module 52 does not receive the response message sent by the physical node 51, the first virtual proxy module 52 determines that the physical node 51 is abnormal.

It should be understood that the OAM message herein may be replaced with a connectivity check message. This is also applicable to this example, and is not limited herein.

In this embodiment of the present invention, the first virtual proxy module may further send a management message for performing a connectivity check to the physical node. Further, the first virtual proxy module may send, based on a management message that is for performing a connectivity check and that is sent by the VNF module, a message for performing a connectivity check to the physical node, so as to detect whether a link of the physical node is connected, thereby improving reliability of a system and reliability of the network node.

The foregoing has described in detail the method for performing a connectivity check according to an embodiment of the present invention, and the following describes a virtual proxy apparatus according to an embodiment of the present invention. It should be understood that the virtual proxy apparatus in the embodiments of the present invention may perform the methods in the foregoing method embodiments. Specifically, the apparatus may include a unit configured to perform the methods in the foregoing method embodiments.

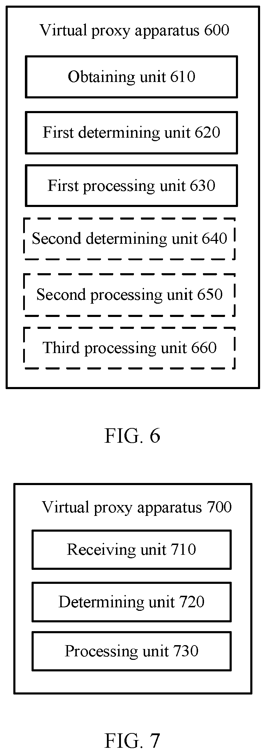

FIG. 6 shows a schematic block diagram of a virtual proxy apparatus 600 according to an embodiment of the present invention. The virtual proxy apparatus 600 may be disposed in the foregoing first virtual proxy module. As shown in FIG. 6, the apparatus 600 includes:
an obtaining unit 610, configured to obtain identification information, where the identification information is used to identify a VNF module set to which a first VNF module belongs;
a first determining unit 620, configured to obtain address information of the first VNF module based on the identification information and a VNF module list, where the VNF module list includes a correspondence between the identification information and the address information of the first VNF module; and
a first processing unit 630, configured to perform a connectivity check on the first VNF module based on the address information that is of the first VNF module and that is obtained by the first determining unit.

In this embodiment of the present invention, the virtual proxy apparatus 600 performs a connectivity check on the first VNF module based on the obtained address information of the first VNF module, so as to improve reliability of a network node.

Optionally, the obtaining unit 610 is specifically configured to:
receive a first message sent by a physical node or a network management system, where the first message includes the identification information; and
obtain the identification information based on the first message.

Optionally, the first processing unit 630 is specifically configured to:
send a second message to the first VNF module based on the first message and the address information of the first VNF module, where a destination address of the second message is the address information of the first VNF module; and
when a first response message sent by the first VNF module is not received, determine that the first VNF module or connectivity of the first VNF module is abnormal.

Optionally, the first processing unit 630 is specifically configured to:
send a second message to the first VNF module based on the first message and the address information of the first VNF module, where a destination address of the second message is the address information of the first VNF module; and
when a first response message sent by the first VNF module is received, send a second response message to the physical node or the network management system.

Optionally, the VNF module set further includes a second VNF module, and the VNF module list further includes a correspondence between the identification information and address information of the second VNF module, and the apparatus 600 further includes:
a second determining unit 640, configured to obtain the address information of the second VNF module based on the identification information and the VNF module list; and
a second processing unit 650, configured to perform a connectivity check on the second VNF module based on the address information of the second VNF module.

Optionally, the second processing unit 650 is specifically configured to:
send a third message to the second VNF module based on the first message and the address information of the second VNF module, where a destination address of the third message is the address information of the second VNF module; and
when a third response message sent by the second VNF module is not received, determine that the second VNF module or connectivity of the second VNF module is abnormal.

The second processing unit 650 is specifically configured to:
send a third message to the second VNF module based on the first message and the address information of the second VNF module, where a destination address of the third message is the address information of the second VNF module; and
when the first response message sent by the first VNF module and the third response message sent by the second VNF module are received, send a fourth response message to the physical node or the network management system.

Optionally, the VNF module list further includes a correspondence between the identification information and address information of a second virtual proxy module, and the apparatus 600 further includes: a third processing unit 660; and
the third processing unit 660 is configured to:
send a fourth message to the second virtual proxy module based on the address information of the second virtual proxy module, where a destination address of the fourth message is the address information of the second virtual proxy module; and
when a fifth response message sent by the second virtual proxy module is not received, determine that the second virtual proxy module and connectivity of the second virtual proxy module are abnormal.

Optionally, the VNF module list further includes a correspondence between the identification information and address information of a second virtual proxy module, and the apparatus further includes: a third processing unit 660; and
the third processing unit 660 is configured to:
send a fourth message to the second virtual proxy module based on the address information of the second virtual proxy module, where a destination address of the fourth message is the address information of the second virtual proxy module; and
when a fifth response message sent by the second virtual proxy module is received, send a sixth response message to the physical node or the network management system.

Optionally, in another embodiment, an obtaining unit 610 is configured to obtain identification information, where the identification information is used to identify a VNF module set to which a first VNF module belongs;
a first determining unit 620, configured to obtain address information of the second virtual proxy module based on the identification information and a VNF module list, where the VNF module list includes a correspondence between the identification information and the address information of the second virtual proxy module; and
a first processing unit 630, configured to send a first message to the second virtual proxy module based on the address information of the second virtual proxy module, where a destination address of the first message is the address information of the second virtual proxy module.

The first message is used to perform a connectivity check on the second virtual proxy module and a VNF module corresponding to the second virtual proxy module.

In this embodiment of the present invention, if a VNF module corresponding to the first virtual proxy module does not exist, the first virtual proxy module directly sends the first message to the second virtual proxy module, and performs a connectivity check on the VNF module corresponding to the second virtual proxy module by using the second virtual proxy module.

FIG. 7 shows a schematic block diagram of a virtual proxy apparatus 700 according to an embodiment of the present invention. The virtual proxy apparatus 700 may be disposed in the foregoing second virtual proxy module. As shown in FIG. 7, the apparatus 700 includes:
a receiving unit 710, configured to receive a first message sent by a first virtual proxy module, where the first message includes identification information, and the identification information is used to identify a VNF module set to which a first VNF module belongs;
a determining unit 720, configured to obtain address information of the first VNF module based on the identification information and a VNF module list, where the VNF module list includes a correspondence between the identification information and the address information of the first VNF module; and
a processing unit 730, configured to perform a connectivity check on the first VNF module based on the address information of the first VNF module.

In this embodiment of the present invention, the second virtual proxy module may perform, based on the identification information from the first virtual proxy module, a connectivity check on a VNF module corresponding to the second virtual proxy module, for example, the first VNF module.

Optionally, the first message is a first OAM message, or is a first connectivity check message.

Optionally, the processing unit 730 is specifically configured to:
send a second message to the first VNF module based on the first message and the address information of the first VNF module, where a destination address of the second message is the address information of the first VNF module; and
when the second virtual proxy module does not receive a first response message sent by the first VNF module, determine that the first VNF module or connectivity of the first VNF module is abnormal.

Optionally, the second message is a second OAM message, or the second message is a second connectivity check message.

Optionally, the processing unit 730 is specifically configured to:
send a second message to the first VNF module based on the first message and the address information of the first VNF module, where a destination address of the second message is the address information of the first VNF module; and
when the second virtual proxy module receives a first response message sent by the first VNF module, send a second response message to the first virtual proxy module.

The second response message is used to indicate a connectivity check result of the second virtual proxy module and the VNF module corresponding to the second virtual proxy module. If the second virtual proxy module is corresponding to only one VNF module, for example, the first VNF module, after receiving the first response message, the second virtual proxy module may send the second response message to the first virtual proxy module; or if the second virtual proxy module is corresponding to a plurality of VNF modules, after receiving a response message sent by each VNF module in the plurality of VNF modules, the second virtual proxy module sends the second response message to the first virtual proxy module.

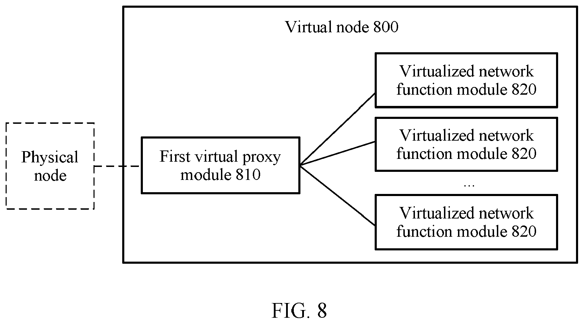

FIG. 8 shows a schematic block diagram of a virtual node 800 according to an embodiment of the present invention. As shown in FIG. 8, the virtual node 800 includes a first virtual proxy module 810 and at least one virtualized network function VNF module 820. The first virtual proxy module 810 may be the first virtual proxy module in the foregoing embodiments, and the virtualized network function module 820 may be the virtualized network function module in the foregoing embodiments.

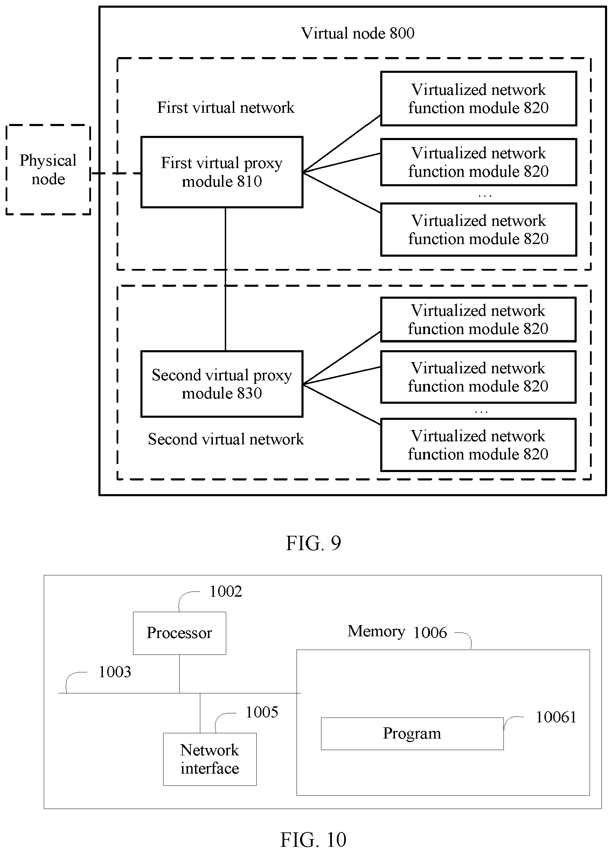

Optionally, as shown in FIG. 9, the virtual node 800 may further include a second virtual proxy module 830.

The second virtual proxy module 830 may be the second virtual proxy module in the foregoing embodiments.

According to the virtual node of this embodiment of the present invention, the first virtual proxy module performs a connectivity check on the first VNF module based on the obtained address information of the first VNF module, so as to improve reliability of the network node.

Optionally, an embodiment of the present invention further provides a network node, where the network node includes a physical node and any one of the foregoing virtual nodes.

FIG. 10 shows a structure of a virtual proxy apparatus according to another embodiment of the present invention. The apparatus includes at least one processor 1002 (for example, a CPU), at least one network interface 1005 or another communications interface, a memory 1006, and at least one communications bus 1003 that is configured to implement connection and communication between these apparatuses. The processor 1002 is configured to execute an executable module stored in the memory 1006, such as a computer program. The memory 1006 may include a high-speed random access memory (RAM: Random Access Memory), or may further include a non-volatile memory (non-volatile memory) such as at least one magnetic disk memory. A communication connection between the memory 1006 and at least one other network element is implemented by using the at least one network interface 1005 (which may be wired or wireless).

In some implementations, the memory 1006 stores a program 10061, and the processor 1002 executes the program 10061 to perform the method for performing a connectivity check according to the foregoing embodiments of the present invention.

It should be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Therefore, the protection scope of the present invention shall be subject to the protection scope of the claims.

## Claims

1. A method for performing a connectivity check by a first virtual proxy of a virtual access node, wherein the method comprises:
obtaining (210) identification information, wherein the identification information identifies a virtualized network function, VNF, module set of the virtual access node, the VNF module set comprising a first VNF module;
obtaining (220) address information of the first VNF module based on the identification information and a VNF module list, wherein the VNF module list comprises a correspondence between the identification information and the address information of the first VNF module; and
performing (230) a connectivity check of the first VNF module based on the address information of the first VNF module;
wherein the VNF module list further comprises a correspondence between the identification information and address information of a second virtual proxy module, and the method further comprises:
sending a third message to the second virtual proxy module, and a destination address of the third message is the address information of the second virtual proxy module;
when the first virtual proxy module does not receive a fourth response message sent by the second virtual proxy module, determining that the second virtual proxy module and connectivity of the second virtual proxy module are abnormal; and
when the first virtual proxy module receives a fourth fifth response message sent by the second virtual proxy module, sending a sixth response message to a physical node or a network management system.

2. The method according to claim 1, wherein the obtaining identification information comprises:
receiving a first message from the physical node or the network management system, wherein the first message comprises the identification information; and
obtaining the identification information based on the first message.

3. The method according to claim 1 or 2, wherein the method further comprises:
sending a second message to the first VNF module, wherein a destination address of the second message is the address information of the first VNF module; and
when the first virtual proxy module does not receive a first response message from the first VNF module, determining that the first VNF module or connectivity of the first VNF module is abnormal.

4. The method according to claim 1 or 2, wherein the method further comprises:
sending a second message to the first VNF module, wherein a destination address of the second message is the address information of the first VNF module; and
when the first virtual proxy module receives a first response message from the first VNF module, sending a second response message to the physical node or the network management system.

5. The method according to any one of claims 1 to 4, wherein the VNF module set further comprises a second VNF module, and the VNF module list further comprises a correspondence between the identification information and address information of the second VNF module, and the method further comprises:
obtaining the address information of the second VNF module based on the identification information and the VNF module list; and
performing a connectivity check of the second VNF module based on the address information of the second VNF module.

6. A virtual proxy apparatus (600) for performing a connectivity check, and the apparatus comprises:
an obtaining unit (610), configured to obtain identification information, wherein the identification information identifies a virtualized network function, VNF, module set of a virtual access node, the VNF module set comprising a first VNF module;
a first determining unit (620), configured to obtain address information of the first VNF module based on the identification information and a VNF module list, wherein the VNF module list comprises a correspondence between the identification information and the address information of the first VNF module; and
a first processing unit (630), configured to perform a connectivity check of the first VNF module;
wherein the VNF module list further comprises a correspondence between the identification information and address information of a second virtual proxy module, and the apparatus further comprises: a third processing unit; and
the third processing unit is configured to:
send a third message to the second virtual proxy module, wherein a destination address of the third message is the address information of the second virtual proxy module;
when a fourth response message sent by the second virtual proxy module is not received, determine that the second virtual proxy module and connectivity of the second virtual proxy module are abnormal; and
when a fourth response message sent by the second virtual proxy module is received, send a sixth response message to a physical node or a network management system.

7. The apparatus according to claim 6, wherein the obtaining unit (610) is specifically configured to:
receive a first message sent by the physical node (11) or the network management system, wherein the first message comprises the identification information; and
obtain the identification information based on the first message.

8. The apparatus according to claim 6 or 7, wherein the first processing unit (630) is specifically configured to:
send a second message to the first VNF module, wherein a destination address of the second message is the address information of the first VNF module; and
when a first response message sent by the first VNF module is not received, determine that the first VNF module or connectivity of the first VNF module is abnormal.

9. The apparatus according to claim 6 or 7, wherein the first processing unit (630) is specifically configured to:
send a second message to the first VNF module, wherein a destination address of the second message is the address information of the first VNF module; and
when a first response message sent by the first VNF module is received, send a second response message to the physical node (11) or the network management system.

10. The apparatus according to any one of claims 6 to 9, wherein the VNF module set further comprises a second VNF module, and the VNF module list further comprises a correspondence between the identification information and address information of the second VNF module, and the apparatus further comprises:
a second determining unit (640), configured to obtain the address information of the second VNF module; and
a second processing unit (650), configured to perform a connectivity check of the second VNF module based on the address information of the second VNF module.

11. A computer program product, comprising a computer program instruction, wherein when the computer program instruction runs on a virtual proxy device, the virtual proxy device performs the method according to any one of claims 1 to 5.

## Patentansprüche

1. Verfahren zum Durchführen einer Konnektivitätsprüfung durch einen ersten virtuellen Proxy eines virtuellen Zugangsknotens, wobei das Verfahren umfasst:
Erhalten (210) von Identifizierungsinformationen, wobei die Identifizierungsinformationen eine VNF-Modulgruppe (VNF - "Virtualized Network Function") des virtuellen Zugangsknotens kennzeichnen und die VNF-Modulgruppe ein erstes VNF-Modul umfasst;
Erhalten (220) von Adressinformationen des ersten VNF-Moduls basierend auf den Identifizierungsinformationen und einer VNF-Modulliste, wobei die VNF-Modulliste eine Entsprechung zwischen den Identifizierungsinformationen und den Adressinformationen des ersten VNF-Moduls umfasst; und
Durchführen (230) einer Konnektivitätsprüfung des ersten VNF-Moduls basierend auf den Adressinformationen des ersten VNF-Moduls;
wobei die VNF-Modulliste ferner eine Entsprechung zwischen den Identifizierungsinformationen und den Adressinformationen eines zweiten virtuellen Proxy-Moduls umfasst und das Verfahren ferner umfasst:
Senden einer dritten Nachricht zu dem zweiten virtuellen Proxy-Modul, wobei eine Zieladresse der dritten Nachricht die Adressinformation des zweiten virtuellen Proxy-Moduls ist;
wenn das erste virtuelle Proxy-Modul nicht eine von dem zweiten virtuellen Proxy-Modul gesendete vierte Antwortnachricht erhält, Feststellen, dass das zweite virtuelle Proxy-Modul und eine Konnektivität des zweiten virtuellen Proxy-Moduls anormal sind; und
wenn das erste virtuelle Proxy-Modul eine von dem zweiten virtuellen Proxy-Modul gesendete vierte Antwortnachricht erhält, Senden einer sechsten Antwortnachricht zu einem physischen Knoten oder einem Netzwerkmanagementsystem.

2. Verfahren nach Anspruch 1, wobei das Erhalten von Identifizierungsinformationen umfasst:
Empfangen einer durch den physischen Knoten oder das Netzwerkmanagementsystem gesendeten ersten Nachricht, wobei die erste Nachricht die Identifizierungsinformationen umfasst; und
Erhalten der Identifizierungsinformationen basierend auf der ersten Nachricht.

3. Verfahren nach Anspruch 1 oder 2, wobei das Verfahren ferner umfasst:
Senden einer zweiten Nachricht zu dem ersten VNF-Modul, wobei eine Zieladresse der zweiten Nachricht die Adressinformation des ersten VNF-Moduls ist; und
wenn das erste virtuelle Proxy-Modul keine erste Antwortnachricht von dem ersten VNF-Modul erhält, Feststellen, dass das erste VNF-Modul oder eine Konnektivität des ersten VNF-Moduls anormal ist.

4. Verfahren nach Anspruch 1 oder 2, wobei das Verfahren ferner umfasst:
Senden einer zweiten Nachricht zu dem ersten VNF-Modul, wobei eine Zieladresse der zweiten Nachricht die Adressinformation des ersten VNF-Moduls ist; und
wenn das erste virtuelle Proxy-Modul eine erste Antwortnachricht von dem ersten VNF-Modul erhält, Senden einer zweiten Antwortnachricht zu dem physischen Knoten oder dem Netzwerkmanagementsystem.

5. Verfahren nach einem der Ansprüche 1 bis 4, wobei die VNF-Modulgruppe ferner ein zweites VNF-Modul umfasst und die VNF-Modulliste ferner eine Entsprechung zwischen den Identifizierungsinformationen und den Adressinformationen des zweiten VNF-Moduls umfasst und das Verfahren ferner umfasst:
Erhalten der Adressinformationen des zweiten VNF-Moduls basierend auf den Identifizierungsinformationen und der VNF-Modulliste; und
Durchführen einer Konnektivitätsprüfung an dem zweiten VNF-Modul, basierend auf den Adressinformationen des zweiten VNF-Moduls.

6. Virtuelle Proxy-Vorrichtung (600) zum Durchführen einer Konnektivitätsprüfung, wobei die Vorrichtung umfasst:
eine Erhalteinheit (610), ausgelegt zum Erhalten von Identifizierungsinformationen, wobei die Identifizierungsinformationen eine VNF-Modulgruppe (VNF - "Virtualized Network Function") eines virtuellen Zugangsknotens kennzeichnen und die VNF-Modulgruppe ein erstes VNF-Modul umfasst;
eine erste Bestimmungseinheit (620), ausgelegt zum Erhalten von Adressinformationen des ersten VNF-Moduls, basierend auf den Identifizierungsinformationen und einer VNF-Modulliste, wobei die VNF-Modulliste eine Entsprechung zwischen den Identifizierungsinformationen und den Adressinformationen des ersten VNF-Moduls umfasst; und
eine erste Verarbeitungseinheit (630), ausgelegt zum Durchführen einer Konnektivitätsprüfung an dem ersten VNF-Modul;
wobei die VNF-Modulliste ferner eine Entsprechung zwischen den Identifizierungsinformationen und Adressinformationen eines zweiten virtuellen Proxy-Moduls umfasst und die Vorrichtung ferner umfasst: eine dritte Verarbeitungseinheit; und
die dritte Verarbeitungseinheit ausgelegt ist zum
Senden einer dritten Nachricht zu dem zweiten virtuellen Proxy-Modul, wobei eine Zieladresse der dritten Nachricht die Adressinformation des zweiten virtuellen Proxy-Moduls ist;
wenn eine vierte, von dem zweiten virtuellen Proxy-Modul gesendete Antwortnachricht nicht empfangen wird,
Feststellen, dass das zweite virtuelle Proxy-Modul und eine Konnektivität des zweiten virtuellen Proxy-Moduls anormal sind; und
wenn eine vierte, von dem zweiten virtuellen Proxy-Modul gesendete Antwortnachricht empfangen wird, Senden einer sechsten Antwortnachricht zu einem physischen Knoten oder einem Netzwerkmanagementsystem.

7. Vorrichtung nach Anspruch 6, wobei die Erhalteinheit (610) im Einzelnen ausgelegt ist zum:
Empfangen einer ersten, von dem physischen Knoten (11) oder dem Netzwerkmanagementsystem gesendeten Nachricht, wobei die erste Nachricht die Identifizierungsinformationen umfasst; und
Erhalten der Identifizierungsinformationen basierend auf der ersten Nachricht.

8. Vorrichtung nach Anspruch 6 oder 7, wobei die erste Verarbeitungseinheit (630) im Einzelnen ausgelegt ist zum:
Senden einer zweiten Nachricht zu dem ersten VNF-Modul, wobei eine Zieladresse der zweiten Nachricht die Adressinformation des ersten VNF-Moduls ist; und
wenn keine durch das erste VNF-Modul gesendete erste Antwortnachricht empfangen wird: Feststellen, dass das erste VNF-Modul oder eine Konnektivität des ersten VNF-Moduls anormal ist.

9. Vorrichtung nach Anspruch 6 oder 7, wobei die erste Verarbeitungseinheit (630) im Einzelnen ausgelegt ist zum:
Senden einer zweiten Nachricht zu dem ersten VNF-Modul, wobei eine Zieladresse der zweiten Nachricht die Adressinformation des ersten VNF-Moduls ist; und
wenn eine durch das erste VNF-Modul gesendete erste Antwortnachricht empfangen wird: Senden einer zweiten Antwortnachricht zu dem physischen Knoten (11) oder dem Netzwerkmanagementsystem.

10. Vorrichtung nach einem der Ansprüche 6 bis 9, wobei die VNF-Modulgruppe ferner ein zweites VNF-Modul umfasst und die VNF-Modulliste ferner eine Entsprechung zwischen den Identifizierungsinformationen und den Adressinformationen des zweiten VNF-Moduls umfasst und die Vorrichtung ferner umfasst:
eine zweite Bestimmungseinheit (640), ausgelegt zum Erhalten der Adressinformationen des zweiten VNF-Moduls; und
eine zweite Verarbeitungseinheit (650), ausgelegt zum Durchführen einer Konnektivitätsprüfung an dem zweiten VNF-Modul basierend auf der Adressinformation des zweiten VNF-Moduls.

11. Computerprogrammprodukt, umfassend eine Computerprogrammanweisung, wobei, wenn die Computerprogrammanweisung auf einer virtuellen Proxy-Einrichtung läuft, die virtuelle Proxy-Einrichtung das Verfahren nach einem der Ansprüche 1 bis 5 durchführt.

## Revendications

1. Procédé pour la réalisation d'un contrôle de connectivité par un premier mandataire virtuel d'un nœud d'accès virtuel, le procédé comprenant les étapes consistant à :
obtenir (210) une information d'identification, l'information d'identification identifiant un ensemble de modules de fonctions de réseau virtualisées (VNF) du nœud d'accès virtuel, l'ensemble de modules VNF comprenant un premier module VNF ;
obtenir (220) une information d'adresse du premier module VNF sur la base de l'information d'identification et d'une liste de modules VNF, la liste de modules VNF comprenant une correspondance entre l'information d'identification et l'information d'adresse du premier module VNF ; et
réaliser (230) un contrôle de connectivité du premier module VNF sur la base de l'information d'adresse du premier module VNF ;
la liste de modules VNF comprenant en outre une correspondance entre l'information d'identification et une information d'adresse d'un second module mandataire virtuel, et le procédé comprenant en outre les étapes consistant à :
envoyer un troisième message au second module mandataire virtuel, une adresse de destination du troisième message étant l'information d'adresse du second module mandataire virtuel ;
quand le premier module mandataire virtuel ne reçoit pas un quatrième message de réponse envoyé par le second module mandataire virtuel, déterminer que le second module mandataire virtuel et que la connectivité du second module mandataire virtuel sont anormaux ; et
quand le premier module mandataire virtuel reçoit un quatrième message de réponse envoyé par le second module mandataire virtuel, envoyer un sixième message de réponse à un nœud physique ou à un système de gestion de réseau.

2. Procédé selon la revendication 1, dans lequel l'obtention d'une information d'identification comprend les étapes consistant à :
recevoir un premier message en provenance du nœud physique ou du système de gestion de réseau, le premier message comprenant l'information d'identification ; et obtenir l'information d'identification sur la base du premier message.

3. Procédé selon la revendication 1 ou 2, le procédé comprenant en outre les étapes consistant à :
envoyer un deuxième message au premier module VNF, une adresse de destination du deuxième message étant l'information d'adresse du premier module VNF ; et
quand le premier module mandataire virtuel ne reçoit pas un premier message de réponse en provenance du premier module VNF, déterminer que le premier module VNF ou que la connectivité du premier module VNF est anormal(e).

4. Procédé selon la revendication 1 ou 2, le procédé comprenant en outre les étapes consistant à :
envoyer un deuxième message au premier module VNF, une adresse de destination du deuxième message étant l'information d'adresse du premier module VNF ; et
quand le premier module mandataire virtuel reçoit un premier message de réponse en provenance du premier module VNF, envoyer un deuxième message de réponse au nœud physique ou au système de gestion de réseau.

5. Procédé selon l'une quelconque des revendications 1 à 4, l'ensemble de modules VNF comprenant en outre un second module VNF, et la liste de modules VNF comprenant en outre une correspondance entre l'information d'identification et l'information d'adresse du second module VNF, et le procédé comprenant en outre les étapes consistant à :
obtenir l'information d'adresse du second module VNF sur la base de l'information d'identification et de la liste de modules VNF ; et
réaliser un contrôle de connectivité du second module VNF sur la base de l'information d'adresse du second module VNF

6. Appareil mandataire virtuel (600) pour la réalisation d'un contrôle de connectivité, l'appareil comprenant :
une unité d'obtention (610), configurée pour obtenir une information d'identification, l'information d'identification identifiant un ensemble de modules de fonctions de réseau virtualisées (VNF) d'un nœud d'accès virtuel, l'ensemble de modules VNF comprenant un premier module VNF ;
une première unité de détermination (620), configurée pour obtenir une information d'adresse du premier module VNF sur la base de l'information d'identification et d'une liste de modules VNF, la liste de modules VNF comprenant une correspondance entre l'information d'identification et l'information d'adresse du premier module VNF ; et
une première unité de traitement (630), configurée pour réaliser un contrôle de connectivité du premier module VNF ;
la liste de modules VNF comprenant en outre une correspondance entre l'information d'identification et une information d'adresse d'un second module mandataire virtuel, et l'appareil comprenant en outre : une troisième unité de traitement ; et la troisième unité de traitement étant configurée pour :
envoyer un troisième message au second module mandataire virtuel, une adresse de destination du troisième message étant l'information d'adresse du second module mandataire virtuel ;
quand un quatrième message de réponse envoyé par le second module mandataire virtuel n'est pas reçu, déterminer que le second module mandataire virtuel et que la connectivité du second module mandataire virtuel sont anormaux ; et
quand un quatrième message de réponse envoyé par le second module mandataire virtuel est reçu, envoyer un sixième message de réponse à un nœud physique ou à un système de gestion de réseau.

7. Appareil selon la revendication 6, dans lequel l'unité d'obtention (610) est spécifiquement configurée pour :
recevoir un premier message envoyé par le nœud physique (11) ou le système de gestion de réseau, le premier message comprenant l'information d'identification ; et
obtenir l'information d'identification sur la base du premier message.

8. Appareil selon la revendication 6 ou 7, dans lequel la première unité de traitement (630) est spécifiquement configurée pour :
envoyer un deuxième message au premier module VNF, une adresse de destination du deuxième message étant l'information d'adresse du premier module VNF ; et
quand un premier message de réponse envoyé par le premier module VNF n'est pas reçu, déterminer que le premier module VNF ou que la connectivité du premier module VNF est anormal(e).

9. Appareil selon la revendication 6 ou 7, dans lequel la première unité de traitement (630) est spécifiquement configurée pour :
envoyer un deuxième message au premier module VNF, une adresse de destination du deuxième message étant l'information d'adresse du premier module VNF ; et
quand un premier message de réponse envoyé par le premier module VNF est reçu, envoyer un deuxième message de réponse au nœud physique (11) ou au système de gestion de réseau.

10. Appareil selon l'une quelconque des revendications 6 à 9, l'ensemble de modules VNF comprenant en outre un second module VNF, et la liste de modules VNF comprenant en outre une correspondance entre l'information d'identification et l'information d'adresse du second module VNF, et l'appareil comprenant en outre :
une seconde unité de détermination (640), configurée pour obtenir l'information d'adresse du second module VNF ; et
une deuxième unité de traitement (650), configurée pour réaliser un contrôle de connectivité du second module VNF sur la base de l'information d'adresse du second module VNF

11. Produit-programme informatique, comprenant une instruction de programme informatique qui, lorsqu'elle est exécutée sur un dispositif mandataire virtuel, amène le dispositif mandataire virtuel à réaliser le procédé selon l'une quelconque des revendications 1 à 5.
